# EUROPEAN PATENT APPLICATION

(11) **EP 4 597 210 A1**
(43) Date of publication of application: **06.08.2025**
(21) Application number: 24830159.0
(22) Date of filing: 07.05.2024
(51) Int. Cl.: G02F 1/035, G02B 6/12

(54) **OPTICAL MODULATION MODULE AND OPTICAL MODULATOR**

(30) Priority: 29.06.2023 CN 202310794199
(71) Applicant: Nanjing Lycore Technologies Co., Ltd., Nanjing, Jiangsu 210000 (CN)
(72) Inventor: LIANG, Hanxiao, Nanjing, Jiangsu 210000 (CN); SONG, Yipin, Nanjing, Jiangsu 210000 (CN); ZHOU, Yingcong, Nanjing, Jiangsu 210000 (CN); WU, Haicang, Nanjing, Jiangsu 210000 (CN); MAO, Wenhao, Nanjing, Jiangsu 210000 (CN); SONG, Shiwei, Nanjing, Jiangsu 210000 (CN); SUN, Weiqi, Nanjing, Jiangsu 210000 (CN); YU, Qingyang, Nanjing, Jiangsu 210000 (CN)
(74) Representative: Reddie & Grose LLP
(86) International application number: PCT/CN2024/091380
(87) International publication number: WO 2025/001511

(57) **Abstract**

The present disclosure provides an optical modulation module and an optical modulator. The optical modulation module includes a waveguide layer. The waveguide layer includes: a flat plate portion; a first protruding portion and a second protruding portion, which are located on the flat plate portion and extend in a first direction, a spacing between top surfaces of the first protruding portion and the second protruding portion and a bottom surface of the flat plate portion being **H1;** and a ridge portion, which is located on the flat plate portion, extends in the first direction and is located between the first protruding portion and the second protruding portion, a first trench being formed between the ridge portion and the first protruding portion, a second trench being formed between the ridge portion and the second protruding portion, and a spacing between a top surface of the ridge portion and the bottom surface of the flat plate portion being H2, where H2 > H1.

## Description

### CROSS REFERENCE TO RELATED APPLICATIONS

The present disclosure claims priority to Chinese Patent Application No. 2023107941999 filed on June 29, 2023, which is incorporated herein by reference in its entirety.

### TECHNICAL FIELD

The present disclosure relates to the technical field of optical waveguides, and in particular to an optical modulation module and an optical modulator.

### BACKGROUND ART

An optical waveguide is a dielectric apparatus that guides the propagation of light waves therein, and is also referred to as a dielectric optical waveguide. A rectangular waveguide and a ridge waveguide are two common waveguide structures. The rectangular waveguide allows better confinement and direction of the transmission of light therein, but the effect of interaction between the light transmitted therein and an external field (e.g., an external electric field) is relatively weak. The effect of interaction between the light transmitted in the ridge waveguide and an external field (e.g., an external electric field) is relatively strong, but the ridge waveguide is relatively weak in confinement and direction of the transmission of light in a ridge thereof.

### SUMMARY

Embodiments of the present disclosure provide an optical modulation module and an optical modulator, in order to improve the capability of a waveguide layer of confinement and direction of light transmission so as to improve the device performance.

According to an aspect of the present disclosure, an optical modulation module is provided. The optical modulation module includes a waveguide layer. The waveguide layer includes: a flat plate portion; a first protruding portion and a second protruding portion, which are located on the flat plate portion and extend in a first direction, a spacing between top surfaces of the first protruding portion and the second protruding portion and a bottom surface of the flat plate portion being H1; and a ridge portion, which is located on the flat plate portion, extends in the first direction and is located between the first protruding portion and the second protruding portion, a first trench being formed between the ridge portion and the first protruding portion, a second trench being formed between the ridge portion and the second protruding portion, and a spacing between a top surface of the ridge portion and the bottom surface of the flat plate portion being H2, where H2 > H1.

In some embodiments, in the first direction, a depth of the first trench and the second trench decreases gradually, and/or, a width of the first trench and the second trench decreases gradually.

In some embodiments, in the first direction, the depth of the first trench and the second trench increases gradually, and/or, the width of the first trench and the second trench increases gradually.

In some embodiments, a length of the first trench and the second trench in the first direction is equal to or less than a length of the ridge portion in the first direction.

In some embodiments, the optical modulation module further includes: a substrate; an isolation layer located on the substrate, the waveguide layer being formed on the isolation layer; and a covering layer covering the waveguide layer, where a refractive index of a material of the isolation layer and a refractive index of a material of the covering layer are both less than a refractive index of a material of the waveguide layer.

In some embodiments, the covering layer covers the ridge portion, the first trench and the second trench.

In some embodiments, the covering layer also covers at least part of the first protruding portion and at least part of the second protruding portion.

In some embodiments, the optical modulation module further includes: an electrode layer formed on a surface of the covering layer; or an electrode layer formed on a surface of at least one of the first protruding portion and the second protruding portion.

In some embodiments, the optical modulation module includes an electro-optic modulation module or a thermo-optic modulation module.

According to an aspect of the present disclosure, an optical modulator is provided. The optical modulator includes an optical modulation module in the previous aspect.

According to one or more embodiments of the present disclosure, the first trench and the second trench can block the diffusion of an optical mode field in a second direction, so that light can be propagated more centrally in a region where the ridge portion is located. Accordingly, this design solution of the embodiments of the present disclosure can improve the capability of the waveguide layer of confinement and direction of light transmission so as to improve the device performance.

It should be understood that the content described in this section is not intended to identify critical or important features of the embodiments of the present disclosure, and is also not intended to limit the scope of the present disclosure. Other features of the present disclosure will be readily understood with reference to the following description.

### BRIEF DESCRIPTION OF THE DRAWINGS

More details, features and advantages of the present disclosure are disclosed in the following description of exemplary embodiments with reference to the accompanying drawings, in which:
FIG. 1 is a schematic cross-sectional view of an optical modulation module according to some exemplary embodiments of the present disclosure;
FIG. 2 is a schematic cross-sectional view of an optical modulation module according to some exemplary embodiments of the present disclosure;
FIG. 3 is a schematic cross-sectional view of an optical modulation module according to some exemplary embodiments of the present disclosure;
FIG. 4 is a schematic cross-sectional view of an optical modulation module according to some exemplary embodiments of the present disclosure;
FIG. 5A is a schematic structural perspective view of an optical modulation module according to some exemplary embodiments of the present disclosure;
FIG. 5B is a schematic structural perspective view of an optical modulation module according to some exemplary embodiments of the present disclosure;
FIG. 5C is a schematic structural perspective view of an optical modulation module according to some exemplary embodiments of the present disclosure; and
FIG. 5D is a schematic structural perspective view of an optical modulation module according to some exemplary embodiments of the present disclosure.

Reference signs:
100 - Optical modulation module
101 - Substrate
102 - Isolation layer
103 - Waveguide layer
104 - Covering layer
105 - Electrode layer
30 - Flat plate portion
31 - First protruding portion
32 - Second protruding portion
33 - Ridge portion
34 - First trench
35 - Second trench

### DETAILED DESCRIPTION OF EMBODIMENTS

Only some exemplary embodiments are briefly described below. As can be appreciated by those skilled in the art, the described embodiments can be modified in various ways without departing from the spirit or scope of the present disclosure. Accordingly, the accompanying drawings and the description are considered illustrative in nature rather than limited.

Ridge waveguide is a type of optical waveguide that has a series of excellent characteristics such as a low dominant mode cutoff frequency, wide bandwidth, and low impedance. A ridge waveguide in the related art includes a flat plate layer and a ridge layer located thereon which are integrally formed. The effect of interaction between light transmitted in such a ridge waveguide and an external action field (e.g., an external electric field) is relatively strong, but the ridge waveguide is relatively weak in confinement and direction of the transmission of light in a ridge thereof.

Embodiments of the present disclosure provide an optical modulation module and an optical modulator, in order to improve the capability of a waveguide layer of confinement and direction of light transmission so as to improve the device performance.

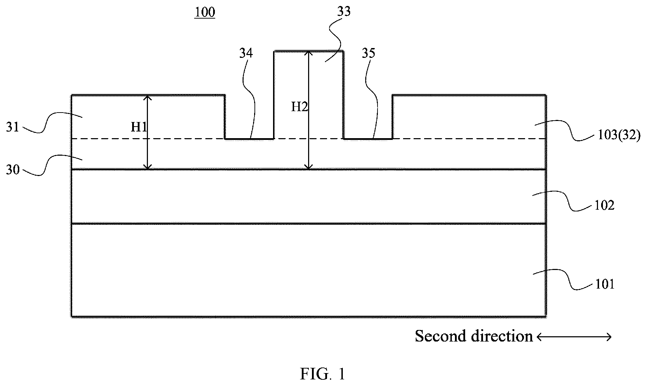

As shown in FIG. 1, an optical modulation module 100 according to some embodiments of the present disclosure includes a waveguide layer 103. The waveguide layer 103 includes a flat plate portion 30, a first protruding portion 31, a second protruding portion 32 and a ridge portion 33. The first protruding portion 31 and the second protruding portion 32 are located on the flat plate portion 30 and extend in a first direction (not shown in the figure, the first direction being perpendicular to the paper). A spacing between top surfaces of the first protruding portion 31 and second protruding portion 32 and a bottom surface of the flat plate portion 30 is H1. The ridge portion 33 is located on the flat plate portion 30, extends in the first direction and is located between the first protruding portion 31 and the second protruding portion 32. A first trench 34 is formed between the ridge portion 33 and the first protruding portion 31, and a second trench 35 is formed between the ridge portion 33 and the second protruding portion 32. A spacing between a top surface of the ridge portion 33 and the bottom surface of the flat plate portion 30 is H2, where H2 > H1.

The first direction may be a direction of light transmission or an opposite direction of light transmission. In the optical modulation module 100 according to the embodiments of the present disclosure, the ridge portion 33 of the waveguide layer 103 is spaced apart from the first protruding portion 31 by means of the first trench 34 and is spaced apart from the second protruding portion 32 by means of the second trench 35, and the spacing (i.e., the maximum material thickness of a region of the waveguide layer 103 where the ridge portion 33 is disposed) between the top surface of the ridge portion 33 and the bottom surface of the flat plate portion 30 is larger than the spacing (i.e., the maximum material thickness of regions of the waveguide layer 103 where the first protruding portion 31 and the second protruding portion 32 are disposed) between the top surfaces of the first protruding portion 31 and the second protruding portion 32 and the bottom surface of the flat plate portion 30. Thus, the first trench 34 and the second trench 35 can block the diffusion of an optical mode field in a second direction, so that light can be propagated more centrally in the region where the ridge portion 33 is located. Accordingly, this design solution of the embodiments of the present disclosure can improve the capability of the waveguide layer 103 of confinement and direction of light transmission so as to improve the device performance.

In the embodiments of the present disclosure, the specific product type of the optical modulation module 100 is not limited, and may be an electro-optic modulation module or a thermo-optic modulation module, for example. The electro-optic modulation module performs phase modulation on the transmitted light based on the electro-optic effect of a waveguide material, and has a relatively fast modulation speed. The thermo-optic modulation module performs phase modulation on the transmitted light based on the thermo-optic effect of the waveguide material and has a relatively slow modulation speed, but has the advantages of a large phase modulation range and high modulation efficiency.

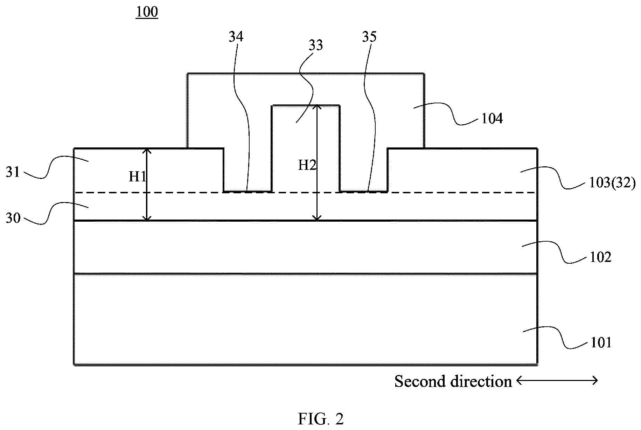

As shown in FIG. 2, in some embodiments of the present disclosure, in addition to the waveguide layer 103, the optical modulation module 100 further includes a substrate 101, an isolation layer 102 and a covering layer 104. The substrate 101, the isolation layer 102, the waveguide layer 103 and the covering layer 104 are arranged in sequence, the waveguide layer 103 is formed on the isolation layer 102, and a refractive index of a material of the isolation layer 102 and a refractive index of a material of the covering layer 104 are both less than a refractive index of a material of the waveguide layer 103. The isolation layer 102 and the covering layer 104 are lower in refractive index than the waveguide layer 103, so that light can be primarily confined to transmitting in the waveguide layer 103, so as to achieve the advantages of the ridge waveguide described above.

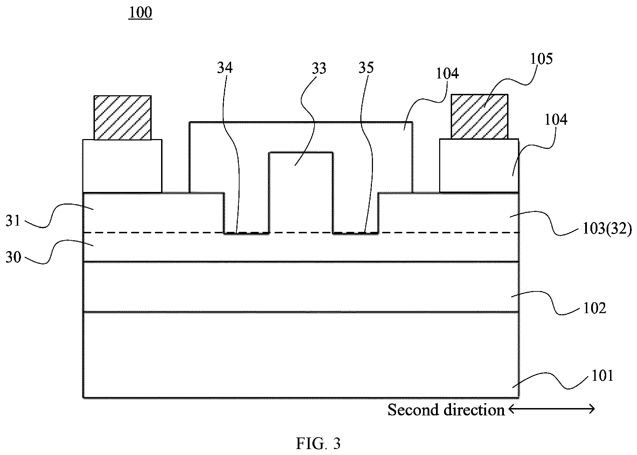

Referring to FIG. 3, in some embodiments, the covering layer 104 covers the ridge portion 33, the first trench 34 and the second trench 35, and also covers at least part of the first protruding portion 31 and at least part of the second protruding portion 32. In this way, an electrode layer 105 may be provided on the covering layer 104, and a covering region and a thickness of the covering layer 104 may be adjusted to flexibly adjust the design pattern and arrangement height of an electrode in the electrode layer 105 so as to match an electrical transmission speed with a light transmission speed as much as possible. As shown in FIG. 3, according to some embodiments of the present disclosure, the optical modulation module 100 further includes an electrode layer 105 formed on a surface of the covering layer 104.

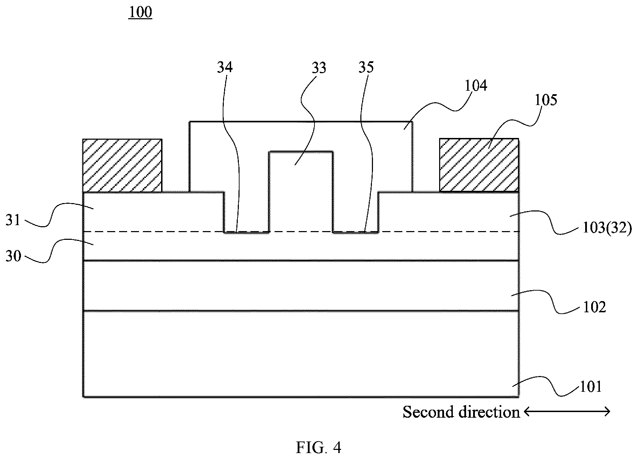

In other embodiments of the present disclosure, the covering layer 104 may also cover only the ridge portion 33, the first trench 34 and the second trench 35, and the electrode layer 105 may be formed directly on a surface of the waveguide layer 103. As shown in FIG. 4, according to some embodiments of the present disclosure, the optical modulation module 100 further includes an electrode layer 105 formed on a surface of at least one of the first protruding portion 31 and the second protruding portion 32.

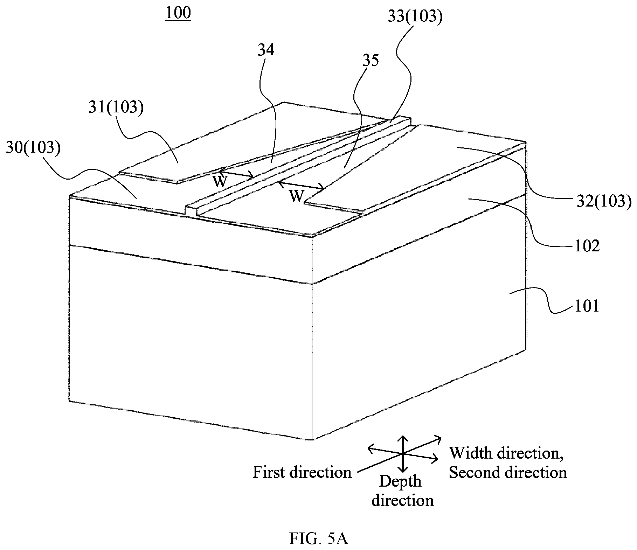

As shown in FIG. 5A, in some embodiments of the present disclosure, a first trench 34 is formed between the ridge portion 33 and the first protruding portion 31, and a second trench 35 is formed between the ridge portion 33 and the second protruding portion 32. A width W of the first trench 34 and the second trench 35 decreases gradually in the first direction.

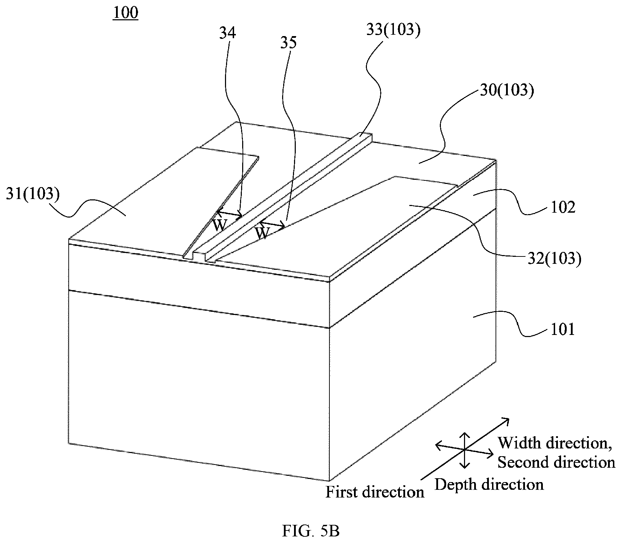

As shown in FIG. 5B, in some embodiments of the present disclosure, a first trench 34 is formed between the ridge portion 33 and the first protruding portion 31, and a second trench 35 is formed between the ridge portion 33 and the second protruding portion 32. A width W of the first trench 34 and the second trench 35 increases gradually in the first direction.

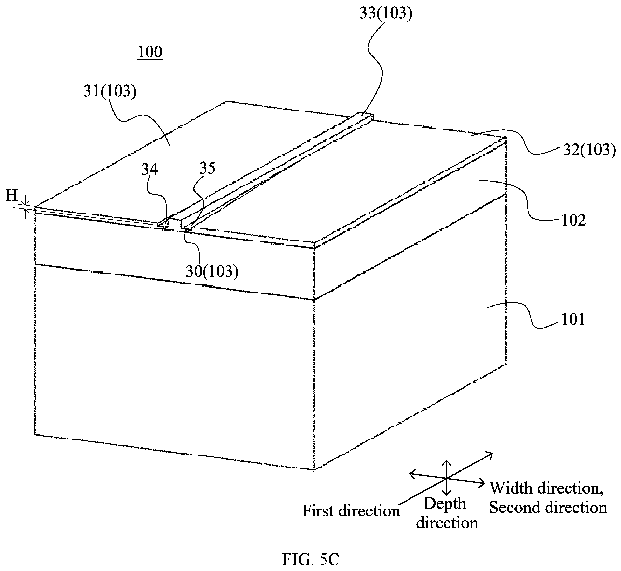

As shown in FIG. 5C, in some embodiments of the present disclosure, a first trench 34 is formed between the ridge portion 33 and the first protruding portion 31, and a second trench 35 is formed between the ridge portion 33 and the second protruding portion 32. In the first direction, a depth H of the first trench 34 and the second trench 35 decreases gradually, and a width thereof also decreases gradually until the trenches disappear.

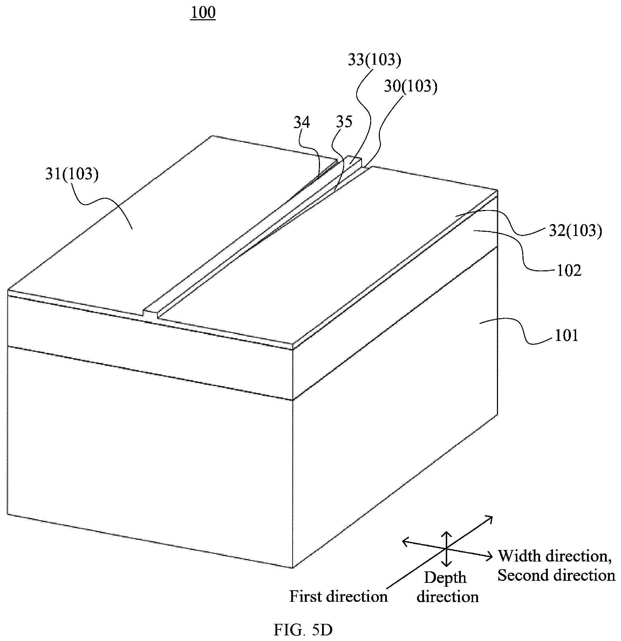

As shown in FIG. 5D, in some embodiments of the present disclosure, a first trench 34 is formed between the ridge portion 33 and the first protruding portion 31, and a second trench 35 is formed between the ridge portion 33 and the second protruding portion 32. A depth and a width of the first trench 34 and the second trench 35 gradually increase from zero in the first direction.

In some embodiments of the present disclosure, as shown in FIG. 5A, a length of the first trench 34 and the second trench 35 in the first direction may be less than a length of the ridge portion 33 in the first direction. In other embodiments of the present disclosure, the length of the first trench and the second trench in the first direction may also be equal to the length of the ridge portion in the first direction. That is, the first trench and the second trench extend through the waveguide layer in the first direction.

In the embodiments described above, the variation trend of the depth and/or the width of the first trench 34 and the second trench 35 can be determined based on the direction of light transmission and the specific type of a photonic device optically coupled to the optical modulation module 100. The depth and/or the width of the first trench 34 and the second trench 35 are designed to change gradually, which can block the diffusion of the optical mode field in the second direction more moderately, so that the optical modulation module 100 can perform moderate and stable spot-size modulation, which is conducive to reducing the light transmission loss.

The embodiments of the present disclosure further provide an optical modulator including an optical modulation module 100 according to any one of the embodiments described above. The optical modulator is a thermo-optic modulator or an electro-optic modulator, for example. The electro-optic modulator may be, for example, a Mach-Zehnder Modulator, and in addition to the optical modulation module 100, may also include a light splitting element, a light combining element, etc.

On the basis of the above design of the optical modulation module 100 and the achieved beneficial effects, the optical modulator has improved device performance accordingly, less light transmission loss, and higher modulation efficiency.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the apparatus or element referred to must have particular orientations and be constructed and operated in the particular orientations, and therefore should not be construed as limiting the scope of protection of the present disclosure.

In addition, the terms such as "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "a plurality of" means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be a mechanical connection, or an electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or defined otherwise, the expression of the first feature being "above" or "below" the second feature may include the case that the first feature is in direct contact with the second feature, or the case that the first feature and the second feature are not in direct contact but are contacted via another feature therebetween. Furthermore, the first feature being "over", "above" or "on" the second feature includes the case where the first feature is directly or obliquely above the second feature, or merely indicates that the first feature is at a higher level than the second feature. The first feature being "below", "under" or "beneath" the second feature includes the case where the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the disclosure of the description of the present disclosure, those skilled in the art will be able to conceive of various changes or substitutions. All these changes or substitutions shall fall within the scope of protection of the present disclosure. Accordingly, the scope of protection of the present disclosure shall be subject to the scope of protection of the claims.

## Claims

1. An optical modulation module, comprising a waveguide layer, wherein the waveguide layer comprises:
a flat plate portion;
a first protruding portion and a second protruding portion, which are located on the flat plate portion and extend in a first direction, a spacing between top surfaces of the first protruding portion and the second protruding portion and a bottom surface of the flat plate portion being H1; and
a ridge portion, which is located on the flat plate portion, extends in the first direction and is located between the first protruding portion and the second protruding portion, a first trench being formed between the ridge portion and the first protruding portion, a second trench being formed between the ridge portion and the second protruding portion, and a spacing between a top surface of the ridge portion and the bottom surface of the flat plate portion being H2, where H2 > H1.

2. The optical modulation module according to claim 1, wherein
in the first direction, a depth of the first trench and the second trench decreases gradually, and/or, a width of the first trench and the second trench decreases gradually.

3. The optical modulation module according to claim 1, wherein
in the first direction, a depth of the first trench and the second trench increases gradually, and/or, a width of the first trench and the second trench increases gradually.

4. The optical modulation module according to claim 1, wherein
a length of the first trench and the second trench in the first direction is equal to or less than a length of the ridge portion in the first direction.

5. The optical modulation module according to claim 1, further comprising:
a substrate;
an isolation layer located on the substrate, the waveguide layer being formed on the isolation layer; and
a covering layer covering the waveguide layer, wherein a refractive index of a material of the isolation layer and a refractive index of a material of the covering layer are both less than a refractive index of a material of the waveguide layer.

6. The optical modulation module according to claim 5, wherein
the covering layer covers the ridge portion, the first trench and the second trench.

7. The optical modulation module according to claim 6, wherein
the covering layer also covers at least part of the first protruding portion and at least part of the second protruding portion.

8. The optical modulation module according to any one of claims 1 to 7, further comprising:
an electrode layer formed on a surface of the covering layer; or
an electrode layer formed on a surface of at least one of the first protruding portion and the second protruding portion.

9. The optical modulation module according to any one of claims 1 to 7, wherein
the optical modulation module comprises an electro-optic modulation module or a thermo-optic modulation module.

10. An optical modulator, comprising an optical modulation module according to any one of claims 1 to 9.
